# EUROPÄISCHE PATENTSCHRIFT

(11) **EP 3 756 779 B1**
(45) Veröffentlichungstag und Bekanntmachung des Hinweises auf die Patenterteilung: **20.10.2021**
(21) Anmeldenummer: 20173247.6
(22) Anmeldetag: 06.05.2020
(51) Int. Cl.: B21D 5/08, B66B 7/02, B21D 47/01

(54) **VERFAHREN ZUR HERSTELLUNG EINER FÜHRUNGSSCHIENE SOWIE FÜHRUNGSSCHIENE**
GUIDE RAIL AND METHOD FOR MAKING A GUIDE RAIL
PROCÉDÉ DE FABRICATION D'UN RAIL DE GUIDAGE AINSI QUE RAIL DE GUIDAGE

(30) Priorität: 26.06.2019 DE 102019117258
(43) Veröffentlichungstag der Anmeldung: 30.12.2020
(73) Patentinhaber: Welser Profile Austria GmbH, 3341 Ybbsitz (AT)
(72) Erfinder: Leichtfried, Markus, 3293 Lunz am See (AT); Emsenhuber, Martin, 3242 Texingtal (AT); Aigner, Kurt, 3341 Ybbsitz (AT); Spreitzer, Erich, 3341 Ybbsitz (AT); Schachinger, Harald, 3340 Waidhofen/Ybbs (AT)
(74) Vertreter: Grünecker Patent- und Rechtsanwälte PartG mbB

(56) Entgegenhaltungen:
- WO-A1-96/00183
- ES-A1- 2 356 204
- JP-A- S57 142 722
- JP-U- S5 192 855
- US-B2- 9 469 505

## Beschreibung

Die vorliegende Erfindung betrifft ein Verfahren zur Herstellung einer Führungsschiene nach dem Oberbegriff des unabhängigen Anspruchs 1.

In einem gattungsgemäßen Verfahren zur Herstellung einer Führungsschiene mit einem T-förmigen Querschnitt, welcher einen ersten Schenkel und einen zweiten Schenkel aufweist, wobei ein erstes Ende des ersten Schenkels an einer Längsseite des zweiten Schenkels ansetzt, wird die Führungsschiene aus einem flachen Metallband derart rollprofiliert, dass
a. das Metallband in einem Umschlagbereich um 180° gebogen wird, wobei der Umschlagbereich ein zweites Ende des ersten Schenkels, welches distal zum zweiten Schenkel liegt, bildet,
b. zwei zum Umschlagbereich angrenzende Dopplungsbereiche des Metallbands durch die 180°-Biegung im Umschlagbereich parallel ausgerichtet werden, wobei die zwei Dopplungsbereiche als eine Dopplung den ersten Schenkel bilden, und
c. zwei distal zum Umschlagbereich an den Dopplungsbereichen angrenzende Bereiche des Metallbands in entgegengesetzte Richtungen um 90° von der Längsausrichtung der Dopplungsbereiche weggebogen werden, wobei diese Bereiche Teilschenkel genannt werden und den zweiten Schenkel bilden,
wobei das Metallband derart im Umschlagbereich gebogen wird, dass Innenseiten der Dopplungsbereiche flächig in direkten Kontakt gebracht werden.

Eine Führungsschiene nach dem Oberbegriff des unabhängigen Anspruchs 1 ist aus der JP S57 142722 A und der US 9 469 505 B2 bekannt.

Eine weitere Führungsschiene mit T-förmigem Querschnitt ist beispielsweise aus der DE 2232377 A1 bekannt. Bei der Herstellung dieser rollprofilierten Führungsschiene wird der Umschlagbereich derart geformt, dass ein Zwischenraum zwischen den parallelen Dopplungsbereichen freigelassen wird. Dadurch können die so hergestellten Führungsschienen nicht die nötige Knicksicherheit gewährleisten, die insbesondere zur Führung von Fangvorrichtungen benötigt wird, da die Führungsflächen dieser Führungsschienen nicht den Klemmkräften der Bremsbacken der Fangvorrichtungen standhalten und so nicht als Bremsflächen für Fangvorrichtungen verwendet werden können.

Dementsprechend werden Führungsschienen mit T-förmigem Querschnitt, die zur Führung von Fangvorrichtungen geeignet sind, gemäß dem Stand der Technik durch Warmwalzen mit anschließenden Fräsen und/ oder Schleifen hergestellt. Ein solches Herstellungsverfahren ist aber durch das Warmwalzen und die nachträgliche spanende Bearbeitung energie- und kostenintensiv.

Es ist daher die Aufgabe der vorliegenden Erfindung, ein Verfahren zur Herstellung einer Führungsschiene mit T-förmigem Querschnitt anzugeben, das eine möglichst effiziente und ressourcensparende Herstellung ermöglicht, die keine nachträglichen Bearbeitungsschritte notwendig macht, und das Führungsschienen herstellt, die die nötige Knicksicherheit zur Führung von Fangvorrichtungen gewährleisten können, in dem die Führungsflächen den Klemmkräften der Bremsbacken der Fangvorrichtungen standhalten.

Die Aufgabe wird durch die Merkmale des unabhängigen Anspruchs 1 gelöst. Demnach besteht bei einem Verfahren nach dem Oberbegriff des unabhängigen Anspruchs 1 dann eine erfindungsgemäße Lösung der Aufgabe, wenn das Metallband im Umschlagbereich vor oder während dem Umbiegen des Metallbands im Umschlagbereich mittels Rollprofilieren ausgedünnt wird, so dass beim Umbiegen des Metallbands im Umschlagbereich die Dopplungsbereiche parallel ausgerichtet und flächig in direkten Kontakt gebracht werden.

Die Dopplungsbereiche sind dabei einlagige Bereiche des Metallbands und bilden in flächigem direkten Kontakt die Dopplung des ersten Schenkels, wobei die Dopplung dementsprechend zweilagig ist.

Die erfindungsgemäße Lösung bietet den Vorteil, dass die Führungsschiene durch Rollprofilieren eines flachen Metallbands kostengünstig und ohne nachträgliche Bearbeitungsschritte hergestellt werden kann und dass die Führungsschiene weiter die nötige Knicksicherheit gegenüber den Klemmkräften von geführten Fangvorrichtungen gewährleisten kann.

Außerdem ermöglicht diese Art der Umsetzung des Umbiegens des Metallbands im Umschlagbereich zum einen ein sehr präzises Aneinanderführen der Dopplungsbereiche und zum anderen eine geringe Höhe des Umschlagbereichs in Längsrichtung des ersten Schenkels.

Erfindungsgemäß hergestellte Führungsschienen eignen sich insbesondere zur Führung von Aufzügen, wobei der erste Schenkel zur Führung des Aufzugs verwendet wird und der zweite Schenkel zur Befestigung der Führungsschiene dient.

Vorteilhafte Ausführungsformen der vorliegenden Erfindung sind Gegenstand der Unteransprüche.

Vorzugsweise setzt der erste Schenkel mittig am zweiten Schenkel an.

Vorzugsweise wird das Metallband im Umschlagbereich derart ausgedünnt, dass ein Hohlraum innerhalb des Umschlagbereichs an der 180°-Biegung entsteht. Damit kann bei gleichbleibend niedriger Toleranz beim Aneinanderführen der Dopplungsbereiche die nötige Toleranz beim Ausdünnen des Metallbands im Umschlagbereich erhöht werden.

Weiter vorzugsweise wird der Umschlagbereich derart gebogen, dass drei gerade Kanten mit einem Winkel von jeweils 90° zwischen den geraden Kanten die Außenkanten des Querschnitts des Umschlagbereichs bilden, wobei zwei der geraden Kanten Verlängerungen von Außenkanten der Dopplungsbereiche sind. Dadurch wird ermöglicht, dass der Umschlagbereich möglichst viel zur Führung beitragen kann. So vergrößern die zwei geraden Kanten, die Verlängerungen von Außenkanten der Dopplungsbereiche bilden, die Fläche an denen Führungen, wie zum Beispiel Gleitführungen und Rollenführungen, und Fangvorrichtungen quer zur Längsrichtung des ersten Schenkels angreifen können, und die dazwischenliegende dritte gerade Kante ermöglicht das Angreifen von Führungen in Längsrichtung des ersten Schenkels.

Gemäß einer weiteren bevorzugten Ausführungsform der vorliegenden Erfindung wird jeweils eine Nut auf einer Außenseite der beiden Dopplungsbereiche vor dem In-Kontakt-Bringen der beiden Innenseiten der Dopplungsbereiche mittels Rollprofilieren derart gebildet, dass die zwei Nuten nach der Rollprofilierung der Dopplung proximal zum ersten Ende des ersten Schenkels sitzen. Die Nuten dienen als Freistellung der an den Nuten angrenzenden Außenseiten der Dopplungsbereiche distal zum ersten Enden des ersten Schenkels, wobei diese Außenseiten dadurch von verschiedenen Führungen als Laufflächen verwendet werden können. In einer besonders bevorzugten Ausführungsform werden die zwei Nuten mit gleichen Ausmaßen, auf der gleichen Höhe in Längsrichtung des ersten Schenkels und mit einem zum ersten Ende des ersten Schenkels proximalen Ende der Nuten gebildet. Vorteilhafterweise ist dieses Ende der Nuten zwischen 5mm bis 15mm von der oberen Kante der Teilschenkel entfernt.

In einer weiteren bevorzugten Ausführungsform der vorliegenden Erfindung ist vorgesehen, dass zwei Einstiche auf den Innenseiten der Dopplungsbereiche vor dem In-Kontakt-Bringen der beiden Innenseiten der Dopplungsbereiche mittels Rollprofilieren derart gebildet werden, dass die zwei Einstiche nach der Rollprofilierung der Dopplung zwischen dem ersten Ende des ersten Schenkels und den zum ersten Ende des ersten Schenkels distalen Enden der Nuten sitzen. Dadurch kann im Falle einer Verschweißung der Dopplungsbereiche am ersten Ende des ersten Schenkels, welche eventuell geringe Verformungen am ersten Ende des ersten Schenkels bedingt, gewährleistet werden, dass die Innenseiten der Dopplungsbereiche zwischen Umschlagbereich und Einstiche in flächigem direktem Kontakt bleiben. Dabei ist es insbesondere von Vorteil, wenn die Einstiche aufeinander und zwischen dem ersten Ende des ersten Schenkels und den zum ersten Ende des ersten Schenkels proximalen Enden der Nuten oder auf der Höhe der zum ersten Ende des ersten Schenkels proximalen Enden der Nuten sitzen.

Gemäß einer weiteren bevorzugten Ausführungsform der vorliegenden Erfindung hat das flache Metallband vor der Umformung des Querschnitts des flachen Metallbands eine Dickentoleranz des Metallbands von unter +/-0,05mm. So kann die Toleranz der Breite zwischen den Außenseiten der Dopplungsbereiche und zwischen den zwei geraden Kanten der Außenkanten des Querschnitts des Umschlagbereichs, die Verlängerungen von Außenkanten der Dopplungsbereiche bilden, im Bereich von +0.1mm/-0mm gewährleistet werden und so die Anforderung an die Maßgenauigkeit der Führungsschienen im Bereich der Führungsflächen erfüllt werden. Vorteilhafterweise ist die Dickentoleranz entweder bereits beim Rohmaterial gegeben oder das Metallband wird vor der Biegung des Metallbands dressiert, um so die benötigte Toleranz zu erreichen. Der Vorgang des Dressierens kann effizient vor der Biegung des flachen Metallbands in der Linie durchgeführt werden.

In einer weiteren bevorzugten Ausführungsform der vorliegenden Erfindung ist vorgesehen, dass die Mittenrauwerte der äußeren Oberfläche zumindest im Umschlagbereich und in den Dopplungsbereichen zwischen Umschlagbereich und den Nuten auf 1,6µm ≤ Ra ≤ 3,2µm eingestellt sind. Dadurch kann die für Führungsschienen benötigte Oberflächengüte im Bereich der Flächen, die mit den Führungen und Fangvorrichtungen interagieren, eingestellt und gewährleistet werden, insbesondere ohne einen nachträglichen Bearbeitungsschritt hinzuzufügen. Vorteilhafterweise sind die Mittenrauwerte der äußeren Oberfläche schon beim Rohmaterial im gewünschten Bereich oder das flache Metallband wird vor der Biegung des flachen Metallbands derart gewalzt, dass die Mittenrauwerte auf die gewünschten Werte gebracht werden.

Gemäß einer besonders bevorzugten Ausführungsform der vorliegenden Erfindung wird eine Schweißnaht an das erste Ende des ersten Schenkels gesetzt, um die beiden Dopplungsbereiche miteinander zu verbinden. Hiermit kann die Torsionssteifigkeit verbessert werden und die Spaltfreiheit zwischen den in direktem flächigem Kontakt befindlichen Innenseiten der Dopplungsbereiche gewährleistet werden. Vorteilhafterweise findet das Schweißen nach dem In-Kontakt-Bringen der beiden Innenseiten der Dopplungsbereiche statt. Weiter vorteilhafterweise wird nach dem Schweißen die Dicke zwischen den Außenkanten der Dopplungsbereich durch ein Kalibrieren in Form eines weiteren Rollprofilierens nochmals eingestellt.

Weiter vorzugsweise werden die Teilschenkel nach der Rollprofilierung mittels Stanzen gelocht, wobei die Löcher auf den Teilschenkeln symmetrisch zu der Längsachse des ersten Schenkels ausgerichtet sind. Da dieser Bearbeitungsschritt in einer Linie mit der Rollprofilierung stattfinden kann, ermöglicht er eine effiziente Bildung der für die Montage der Führungsschiene nötigen Verbindungselemente.

In einer weiteren bevorzugten Ausführungsform der vorliegenden Erfindung ist vorgesehen, dass der Hohlraum im Umschlagbereich und/oder die zwei Einstiche einen bestimmten Mindestquerschnitt aufweisen, sodass der Hohlraum und/oder die zwei Einstiche geeignet sind ein längliches Element aufzunehmen, welches vorzugsweise beispielsweise eine Leitung oder ein Heizdraht ist. Dadurch kann sich das längliche Element innerhalb des Hohlraums oder innerhalb der zwei Einstiche befinden. Vorteilhafterweise liegen die zwei Einstiche auf der gleichen Höhe und bilden zusammen einen Querschnitt, der das längliche Element aufnehmen kann.

Vorzugsweise wird das längliche Element in den Hohlraum eingeführt. Dadurch kann das längliche Element innerhalb des Hohlraums für verschiedene vorteilhafte Zwecke genutzt werden. Weiter vorzugsweise kann auch in einen der zwei Einstiche oder in den Querschnitt, den die zwei Einschnitte zusammen bilden, das längliche Element eingeführt werden.

In einer besonders bevorzugten Ausführungsform ist das längliche Element eine Leitung. Die Leitung kann zum Beispiel eine elektrische Leitung sein. Vorteilhafterweise wird eine elektrische Leitung zum Beispiel für eine Positions- bzw. Geschwindigkeitsbestimmung genutzt. Gemäß einer weiteren bevorzugten Ausführungsform der vorliegenden Erfindung werden vor oder während dem Rollprofilieren sich wiederholende Muster in den Bereich des Hohlraums im Umschlagbereich und/oder in die zwei Einstiche geprägt. Vorteilhafterweise werden diese Muster zur Positions- bzw. Geschwindigkeitsbestimmung genutzt, indem zum Beispiel Induktionsmessgeräte oder Ultraschallgeräte die Muster auslesen.

Die Aufgabe wird ferner gelöst durch die Merkmale des unabhängigen Anspruchs 12.

Ein Ausführungsbeispiel der vorliegenden Erfindung wird im Folgenden anhand von Zeichnungen näher erläutert.

Es zeigen:
- Figur 1a, b: einen Querschnitt des flachen Metallbands und einen Querschnitt einer fertig umgeformten, erfindungsgemäßen Führungsschiene,
- Figur 2a, b, c, d: Querschnitte von teilweise umgeformten Metallbändern und Rollen zur Rollprofilierung,
- Figur 3a, b: zwei Detailansichten der Enden einer erfindungsgenäßen Führungsschiene von schräg oben.

Für die folgenden Ausführungen gilt, dass gleiche Teile durch gleiche Bezugszeichen bezeichnet sind. Sofern in einer Figur Bezugszeichen enthalten sind, auf die in der zugehörigen Figurenbeschreibung nicht näher eingegangen wird, so wird auf vorangehende oder nachfolgende Figurenbeschreibungen Bezug genommen.

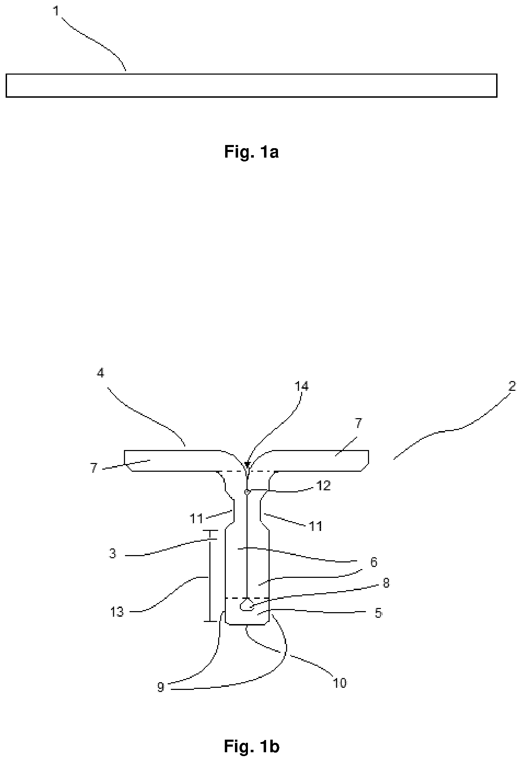

Fig. 1 zeigt das Metallband 1 im Ausgangsstadium und die fertige, erfindungsgemäße Führungsschiene 2.

Fig. 1a zeigt dabei den Querschnitt des flachen Metallbands 1 in seiner noch unverformten Form. Das Metallband 1 besteht dabei aus Stahl, wobei auch andere Metalle verwendet werden können. Besonders bevorzugt wird für dieses Verfahren ein Stahl mit der Güte S315MC. Bevor das Metallband 1 mittels Rollprofilieren zur fertigen Führungsschiene 2 umgeformt wird, werden durch einen vorgeschalteten Dressierstich Dickenschwankungen des flachen Metallbands 1 ausgeglichen und eine Dickentoleranz von unter +/- 0,05mm eingestellt. Diese hohe Maßgenauigkeit des flachen Metallbands 1 gewährleistet auch eine hohe Maßgenauigkeit der fertigen Führungsschiene 2. Neben dem Dressierstich wird weiter die Oberfläche des flachen Metallbands 1 durch Rollen mit einer Struktur versehen, um geforderte Rauheitswerte in bestimmten Bereichen der fertigen Führungsschiene 2 zu erreichen. Nach diesen zwei vorgeschalteten Schritten, die in einer Linie zur Rollprofilierung integriert werden können, erfolgt die Umformung des flachen Metallband 1 mittels Rollprofilieren, welches auch unter dem Namen Kaltwalzen bekannt ist.

Fig. 1b zeigt den Querschnitt einer fertig umgeformten, erfindungsgemäßen Führungsschiene 2. Der Querschnitt des Metallbands 1 wird bei der Umformung zur fertigen Führungsschienen 2 in einem mehrstufigen Umformprozess mittels Rollprofilieren stellenweise ausgedünnt und gleichzeitig oder darauf folgend in die endgültige Form gebracht.

Wie in Fig. 1b gezeigt, weist die fertige Führungsschiene 2 einen T-förmigen Querschnitt mit einem ersten Schenkel 3 und einem zweiten Schenkel 4 auf. Der erste Schenkel 3 sitzt dabei senkrecht und mittig auf dem zweiten Schenkel 4. Zur Formung dieses Querschnitts der Führungsschiene 2 wird das Metallband 1 in einem Umschlagbereich 5, welcher sich mittig auf dem Metallband 2 befindet, um 180° gebogen. Durch die Biegung im Umschlagbereich 5 werden die zwei Dopplungsbereiche 6, welche sich angrenzend an beiden Seiten des Umschlagsbereichs 5 auf dem Metallband 1 befinden, parallel zueinander ausgerichtet und werden die Innenseiten der zwei Dopplungsbereiche 6 flächig in direkten Kontakt gebracht. Der Umschlagbereich 5 in Kombination mit den Dopplungsbereichen 6 bildet den ersten Schenkel 3 aus. Zur Formung des zweiten Schenkels 4 werden zwei Teilschenkel 7, welche sich an den beiden äußeren Seiten der Dopplungsbereiche 6 auf dem Metallband 1 befinden, in entgegengesetzte Richtungen um 90° von der Längsausrichtung des ersten Schenkels 3 weggebogen.

Da das genaue Aufeinandertreffen der Innenseiten der Dopplungsbereiche 6 von hoher Bedeutung ist und die Höhe des Umschlagbereichs 5 in Längsrichtung möglichst geringgehalten werden möchte, wird das Metallband 1 im Umschlagbereich 5 vor oder während der 180° Biegung ausgedünnt. Durch das Ausdünnen können die beiden Innenseiten der Dopplungsbereiche 6 sehr genau flächig in direkten Kontakt gebracht werden. Es bildet sich dabei ein Hohlraum 8 innerhalb des Umschlagbereiches 5. Damit die Oberflächen des Umschlagbereichs 5 möglichst gut zur Führung eingesetzt werden können, wird der Umschlagbereich 5 derart profiliert, dass drei gerade Kanten 9,10 mit einem Winkel von jeweils 90° zwischen den drei Kanten 9,10 die Außenkanten des Querschnitts des Umschlagbereichs 5 bilden. Die zwei Kanten 9 sind dabei parallel ausgerichtet und bilden Verlängerungen der Außenseiten der Dopplungsbereiche 6. Die dritte Kante 10, welche senkrecht zu den beiden Kanten 9 ausgerichtet ist, bildet ein Kopfende des ersten Schenkels.

Die zwei Kanten 9 bilden mit den anschließenden Teilbereichen der Dopplungsbereiche 6 die zwei Laufflächen 13 der Führungsschiene 2, welche auch als Bremsflächen für Fangverrichtungen verwendet werden können. Da die Dickentoleranz des flachen Metallbands 1 derart eingestellt wurde, kann durch das erfindungsgemäße Verfahren auch im Bereich der Laufflächen 13 eine Toleranz der Breite zwischen den zwei Laufflächen 13 von + 0,1mm / - 0mm gewährleistet werden. Weiter können ebenfalls die Mittenrauwerte der Laufflächen 13 durch das vorgeschaltete Rollen auf ein Bereich von 1,6µm ≤ Ra ≤ 3,2µm eingestellt werden. Damit und durch die hohe Knicksicherheit, die aus dem flächigen direkten Kontakt der Innenseiten der Dopplungsbereiche 6 resultiert, sind die Führungsflächen auch für Schwerlast- und Hochgeschwindigkeitsanlagen geeignet und Fangvorrichtungen können eingesetzt werden.

Zur Freistellung der Laufflächen 13 werden zwei Nuten 11 auf den Außenseiten der Dopplungsbereiche 6 unterhalb der Laufflächen 13 proximal zum zweiten Schenkel 7 mittels Rollprofilieren vor dem Zusammenbiegen der Innenseiten der Dopplungsbereiche 6 ausgebildet Die zwei Nuten 11 weisen die gleichen Ausmaße auf und befinden sich auf gleicher Höhe in Längsrichtung des ersten Schenkels 3. Weiter werden mittels Rollprofilieren zwei Einstiche 12 auf den Innenseiten der Dopplungsbereiche 6 vor dem Zusammenbringen der Innenseiten der Dopplungsbereiche 6 ausgebildet. Die Einstiche 12 befinden sich beide sowohl auf der Höhe in Längsrichtung der Enden der Nuten 11 proximal zum zweiten Schenkel 4 als auch auf der Höhe in Längsrichtung des ersten Schenkels 3, bei der die Biegung der Dopplungsbereiche 6 zu den Teilschenkeln 7 ansetzt.

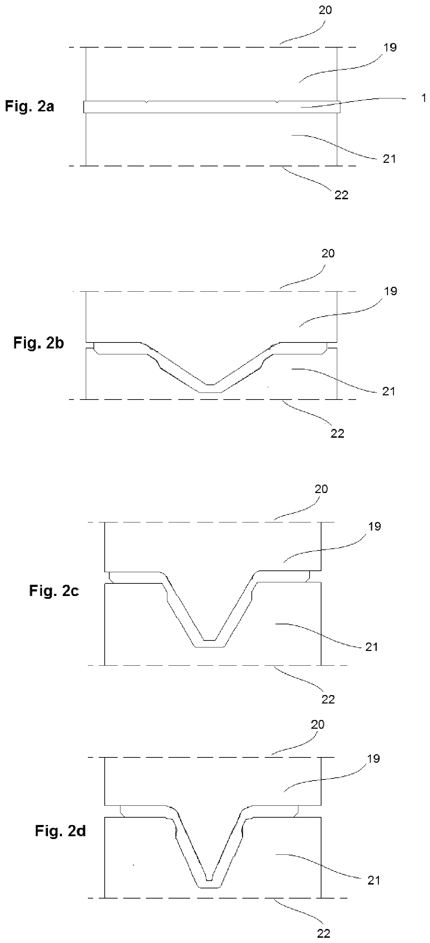

Die Fig. 2a, b, c und d zeigen Querschnitte von teilweise umgeformten Metallbändern und Rollen zur Rollprofilierung in einer Sequenz von beispielhaften Umformschritten des Verfahrens. Dabei wird das Metallband 1 zwischen einer oberen Rolle 19 mit einer Dreh- und Symmetrieachse 20 und einer unteren Rolle 21 mit einer Dreh- und Symmetrieachse 22 rollprofiliert. Die obere Rolle 19 und untere Rolle 21 wird hierbei von Sequenz zu Sequenz angepasst und formt so den Querschnitt des Metallbands 1 in mehreren Umformschritten zum fertigen Querschnitt der Führungsschiene 2. In Fig. 2a wird gezeigt, wie zuerst nur die beiden Einstiche 12 gebildet werden. Die Fig. 2b zeigt, wie der Querschnitt des Metallbands 1 an den Stellen der Nuten 11 und im Umschlagbereich 5 ausgedünnt wird. Dabei wird ebenfalls mit der Biegung im Umschlagbereich 5 und an den Enden der Dopplungsbereiche 6 begonnen. Die Fig. 2c und d zeigen eine weitere Ausbildung der Ausdünnungen im Bereich der Nuten 11 und im Umschlagbereich 5, wobei in der Fig. 2d auch gezeigt wird, wie der Hohlraum 8 ausgebildet wird. Die gezeigten Schritte des Umformprozesses sind nur als Beispiel zu verstehen und es gibt noch weitere Stationen der Rollprofilierung zwischen und nach den gezeigten Schritten des Umformprozesses.

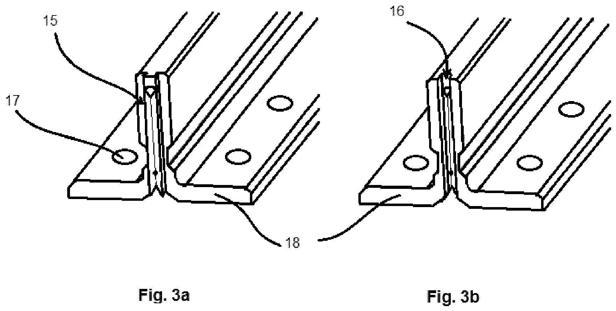

Zur Fertigstellung der Führungsschiene 2 werden noch weitere Verfahrensschritte während oder nach dem Rollprofilieren getätigt. Zur Erläuterung dieser Schritte zeigen die Fig. 3a und Fig. 3b zwei Detailansichten der zwei Enden 18 einer Führungsschiene 2 von schräg oben. Die erläuterten Verfahrensschritte können hierbei in unterschiedlicher Reihenfolge ausgeführt werden, wobei hier eine beispielhafte Reihenfolge erläutert wird.

Ein erster Verfahrensschritt, der die Torsionssteifigkeit der Führungsschiene 2 gewährleistet, ist das Anbringen einer Schweißnaht 14 am distal vom Umschlagbereich 5 gelegenen Ende des ersten Schenkels 3. Ein mögliches Verfahren zur Anbringung der Schweißnaht kann ein Laserschweißverfahren sein. Die Schweißnaht sitzt dementsprechend an beiden Dopplungsbereichen 6 und fixiert so den direkten Kontakt zwischen den Innenseiten der Dopplungsbereiche 6. Eine solche Schweißnaht kann in einer Fertigungslinie während dem Rollprofilieren angebracht werden, nachdem die Dopplungsbereich 6 aneinander gebracht wurden. Nach dem Schweißen wird insbesondere die Dicke zwischen den Führungsflächen 13 durch ein weiteres Rollprofilieren nochmals kalibriert.

Im Anschluss an das Rollprofilieren werden in die Teilschenkel 7 Löcher 17 gestanzt, welche für die Verbindung mit Profilverbindungsstücken benötigt werden, und dann die Führungsschiene 2 auf eine bestimmte Länge gebracht. Das Ablängen kann hierbei zum Beispiel durch einen Kaltsägeschnitt erfolgen, wobei eine übliche Länge der Führungsschiene 2 5m ist. Die durchs Ablängen gebildeten Enden 18 werden anschließend zu einer Schäftung für die Ausrichtung und Fixierung der Führungsschienen 2 durch einen Fräsvorgang weiterbearbeitet. In diesem Fräsvorgang wird an dem einen Ende 18, gezeigt in der Fig. 3a, entlang dem ersten Schenkel 3 ein Vorsprung 15 freigelegt und auf dem anderen Ende 18, gezeigt in der Fig. 3b, entlang dem ersten Schenkel 3 eine Nut 16 gefräst. So können zwei Führungsschienen 2 aneinander fixiert und ausgerichtet werden. Zum Korrosionsschutz wird an den Fräsvorgang noch ein Lackierervorgang angeschlossen, der die Führungsschiene im Bereich des zweiten Schenkels 4, außer an den Enden 18, und im Bereich des ersten Schenkels 3, außer an den Enden 18, ausgehend von den Teilschenkeln 7 bis zu den Nuten 11 mit einem Korrosionsschutz versieht. Im Anschluss daran wird ein Heizdraht durch den Hohlraum 8 des Umschlagbereichs 5 geführt. Dieser kann die Führungsflächen 13 beheizen und so einen Frostschutz gewährleisten. Statt dem Heizdraht kann auch eine elektrische Leitung durch den Hohlraum 8 geführt werden, welche zur Positions- bzw. Geschwindigkeitsbestimmung genutzt wird.

### Bezugszeichenliste

- 1: Metallband
- 2: Führungsschiene
- 3: Erster Schenkel
- 4: Zweiter Schenkel
- 5: Umschlagbereich
- 6: Dopplungsbereiche
- 7: Teilschenkel
- 8: Hohlraum
- 9: Gerade Kante (senkrecht)
- 10: Gerade Kante (waagrecht)
- 11: Nut (erster Schenkel)
- 12: Einstich
- 13: Lauffläche
- 14: Schweißnaht
- 15: Vorsprung
- 16: Nut (Ende)
- 17: Loch
- 18: Ende
- 19: Obere Rolle
- 20: Achse und Symmetrieachse der oberen Rolle
- 21: Untere Rolle
- 22: Achse und Symmetrieachse der unteren Rolle

## Patentansprüche

1. Verfahren zur Herstellung einer Führungsschiene (2) mit einem T-förmigen Querschnitt, welcher einen ersten Schenkel (3) und einen zweiten Schenkel (4) aufweist, wobei ein erstes Ende des ersten Schenkels (3) an einer Längsseite des zweiten Schenkels (4) ansetzt, wobei die Führungsschiene (2) aus einem flachen Metallband (1) derart rollprofiliert wird, dass
a. das Metallband (1) in einem Umschlagbereich (5) um 180° gebogen wird, wobei der Umschlagbereich (5) ein zweites Ende des ersten Schenkels (3), welches distal zum zweiten Schenkel (4) liegt, bildet,
b. zwei zum Umschlagbereich (5) angrenzende Dopplungsbereiche (6) des Metallbands (1) durch die 180°-Biegung im Umschlagbereich (5) parallel ausgerichtet werden, wobei die zwei Dopplungsbereiche (6) als eine Dopplung den ersten Schenkel (3) bilden, und
c. zwei distal zum Umschlagbereich (5) an den Dopplungsbereichen (6) angrenzende Bereiche des Metallbands (1) in entgegengesetzte Richtungen um 90° von der Längsausrichtung der Dopplungsbereiche (6) weggebogen werden, wobei diese Bereiche Teilschenkel (7) genannt werden und den zweiten Schenkel (4) bilden,
wobei das Metallband (1) derart im Umschlagbereich (5) gebogen wird, dass Innenseiten der Dopplungsbereiche (6) flächig in direkten Kontakt gebracht werden.
**dadurch gekennzeichnet, dass** das Metallband (1) im Umschlagbereich (5) vor oder während dem Umbiegen des Metallbands (1) im Umschlagbereich (5) mittels Rollprofilieren ausgedünnt wird, so dass beim Umbiegen des Metallbands (1) im Umschlagbereich (5) die Dopplungsbereiche (6) parallel ausgerichtet und flächig in direkten Kontakt gebracht werden.

2. Verfahren nach Anspruch 1, **dadurch gekennzeichnet, dass** das Metallband (1) im Umschlagbereich (5) derart ausgedünnt wird, dass ein Hohlraum (8) innerhalb des Umschlagbereichs (5) an der 180°-Biegung entsteht.

3. Verfahren nach einem der Ansprüche 1 oder 2 **dadurch gekennzeichnet, dass** der Umschlagbereich (5) derart gebogen wird, dass drei gerade Kanten (9, 10) mit einem Winkel von jeweils 90° zwischen den geraden Kanten (9, 10) die Außenkanten des Querschnitts des Umschlagbereichs (5) bilden, wobei zwei der geraden Kanten (9) Verlängerungen von Außenkanten der Dopplungsbereiche (6) sind.

4. Verfahren nach einem der Ansprüche 1 bis 3, **dadurch gekennzeichnet, dass** jeweils eine Nut (11) auf einer Außenseite der beiden Dopplungsbereiche (6) vor dem In-Kontakt-Bringen der beiden Innenseiten der Dopplungsbereiche (6) mittels Rollprofilieren derart gebildet wird, dass die zwei Nuten (11) nach der Rollprofilierung der Dopplung proximal zum ersten Ende des ersten Schenkels (3) sitzen.

5. Verfahren nach Anspruch 4, **dadurch gekennzeichnet, dass** zwei Einstiche (12) auf den Innenseiten der Dopplungsbereiche (6) vor dem In-Kontakt-Bringen der beiden Innenseiten der Dopplungsbereiche (6) mittels Rollprofilieren derart gebildet werden, dass die zwei Einstiche (12) nach der Rollprofilierung der Dopplung zwischen dem ersten Ende des ersten Schenkels (3) und den zum ersten Ende des ersten Schenkels (3) distalen Enden der Nuten (11) sitzen.

6. Verfahren nach einem der Ansprüche 1 bis 5 **dadurch gekennzeichnet, dass** eine Schweißnaht (14) an das erste Ende des ersten Schenkels (3) gesetzt wird, um die beiden Dopplungsbereiche (6) miteinander zu verbinden.

7. Verfahren nach einem der Ansprüche 1 bis 6 **dadurch gekennzeichnet, dass** die Teilschenkel (7) nach der Rollprofilierung mittels Stanzen gelocht werden, wobei die Löcher auf den Teilschenkeln (7) symmetrisch zu der Längsachse des ersten Schenkels (3) ausgerichtet sind.

8. Verfahren nach den Ansprüchen 2 und 5, **dadurch gekennzeichnet, dass** der Hohlraum (8) im Umschlagbereich (5) und/oder die zwei Einstiche (12) einen bestimmten Mindestquerschnitt aufweisen, sodass der Hohlraum (8) und/oder die zwei Einstiche (12) geeignet sind, ein längliches Element aufzunehmen, welches beispielsweise eine Leitung oder ein Heizdraht ist.

9. Verfahren nach Anspruch 8, **dadurch gekennzeichnet, dass** das längliche Element in den Hohlraum (8) eingeführt wird.

10. Verfahren nach Anspruch 9, **dadurch gekennzeichnet, dass** das längliche Element eine Leitung ist.

11. Verfahren nach den Ansprüchen 2 und 5, **dadurch gekennzeichnet, dass** vor oder während dem Rollprofilieren sich wiederholende Muster in den Bereich des Hohlraums (8) im Umschlagbereich (5) und/oder in die zwei Einstiche (12) geprägt werden.

12. Führungsschiene (2), aus einem Metallband (1) durch Rollprofilieren hergestellt, mit einem T-förmigen Querschnitt, wobei dieser einen ersten Schenkel (3) und einen zweiten Schenkel (4) aufweist, wobei ein erstes Ende des ersten Schenkels (3) an einer Längsseite des zweiten Schenkels (4) ansetzt und ein zweites Ende des ersten Schenkels (3), welches distal zum zweiten Schenkel (4) liegt, einen Umschlagbereich (5) aufweist, der eine 180° Biegung des Metallbands (1) aufweist, wobei zwei zum Umschlagbereich (5) angrenzende Dopplungsbereiche (6) des Metallbands (1) durch die 180°-Biegung im Umschlagbereich (5) parallel ausgerichtet sind, wobei die Dopplungsbereiche (6) als eine Dopplung den ersten Schenkel (3) bilden, und zwei distal zum Umschlagbereich (5) an den Dopplungsbereichen (6) angrenzende Bereiche des Metallbands (1) in entgegengesetzte Richtungen um 90° von der Längsausrichtung der Dopplungsbereiche (6) weggebogen sind, wobei diese Bereiche Teilschenkel (7) genannt werden und den zweiten Schenkel (4) bilden,
wobei sich Innenseiten der Dopplungsbereiche (6) flächig in direktem Kontakt befinden, **dadurch gekennzeichnet, dass** das Metallband (1) im Umschlagbereich (5) mittels Rollprofilieren ausgedünnt ist, sodass im Umschlagbereich (5) die Dopplungsbereiche (6) parallel ausgerichtet und flächig in direktem Kontakt sind, wobei die Führungsschiene (2) insbesondere durch ein Verfahren nach einem der Ansprüche 1 bis 11 hergestellt ist.

## Claims

1. A method for manufacturing a guide rail (2) having a T-shaped cross-section, which includes a first leg (3) and a second leg (4), a first end of the first leg (3) adjoining a longitudinal side of the second leg (4), wherein the guide rail (2) is roll-profiled from a flat metal strip (1) such that
a. the metal strip (1) is bent through 180° in a turn-over region (5), the turn-over region (5) forming a second end of the first leg (3) positioned distal to the second leg (4),
b. two doubling regions (6) of the metal strip (1) adjacent to the turn-over region (5) are aligned in parallel by the bending through 180° in the turn-over region (5), the two doubling regions (6) forming the first leg (3) as a duplicate structure, and
c. two regions of the metal strip (1) adjacent to the doubling regions (6) positioned distal to the turn-over region (5) are bent away by 90° from the longitudinal orientation of the doubling regions (6) in opposite directions, these regions being referred to as sublegs (7) and forming the second leg (4),
wherein the metal strip (1) is bent in the turn-over region (5) so that inner sides of the doubling regions (6) are brought into direct surface contact,
**characterized in that** the metal strip (1) is thinned in the turn-over region (5) by means of roll-profiling before or during the bending of the metal strip (1) in the turn-over region (5), so that, when the metal strip (1) is bent in the turn-over region (5), the doubling regions (6) are aligned in parallel and brought into direct surface contact.

2. The method according to claim 1, **characterized in that** the metal strip (1) is thinned out in the turn-over region (5) so that a cavity (8) is formed within the turn-over region (5) at the 180°-bend.

3. The method according to any one of claims 1 or 2, **characterized in that** the turn-over region (5) is bent so that three straight edges (9, 10) with an angle of 90° between each of the straight edges (9, 10) form the outer edges of the cross-section of the turn-over region (5), wherein two of the straight edges (9) are extensions of outer edges of the doubling regions (6).

4. The method according to any one of claims 1 to 3, **characterized in that** a groove (11) is formed at an outer side of each of the two doubling regions (6) before the two inner sides of the doubling regions (6) are brought into contact by means of roll-profiling so that the two grooves (11) are positioned proximal to the first end of the first leg (3) after the roll profiling of the duplicate structure.

5. The method according to claim 4, **characterized in that** two punctures (12) are formed at the inner sides of the doubling regions (6) before bringing the two inner sides of the doubling regions (6) into contact by means of roll-profiling, so that the two punctures (12) are located between the first end of the first leg (3) and the ends of the grooves (11) distal to the first end of the first leg (3) after roll-profiling of the duplicate structure.

6. The method according to any one of claims 1 to 5, **characterized in that** a weld (14) is applied at the first end of the first leg (3) to join the two doubling regions (6) to each other.

7. The method according to any one of claims 1 to 6, **characterized in that** the sublegs (7) are punctured by means of punching after roll-profiling, the holes on the sublegs (7) being aligned symmetrically to the longitudinal axis of the first leg (3).

8. The method according to claims 2 and 5, **characterized in that** the cavity (8) in the turn-over region (5) and/or the two punctures (12) have a certain minimum cross section so that the cavity (8) and/or the two punctures (12) are suitable for receiving an elongated element which is, for example, a conduit or a heating wire.

9. The method according to claim 8, **characterized in that** the elongated element is inserted into the cavity (8).

10. The method of claim 9, **characterized in that** the elongated member is a conduit.

11. The method according to claims 2 and 5, **characterized in that** before or during the roll-forming repetitive patterns are embossed into the area of the cavity (8) in the turn-over region (5) and/or into the two punctures (12).

12. A guide rail (2), made of a metal strip (1) by roll-forming, having a T-shaped cross-section which includes a first leg (3) and a second leg (4), wherein a first end of the first leg (3) adjoins a longitudinal side of the second leg (4) and a second end of the first leg (3), which is positioned distal to the second leg (4), includes a turn-over region (5) which has a bend of 180° of the metal strip (1), wherein two doubling regions (6) of the metal strip (1) adjacent to the turn-over region (5) are aligned in parallel by the 180° bend in the turn-over region (5), the doubling regions (6) forming the first leg (3) as a duplicate structure and two regions of the metal strip (1) adjacent to the doubling regions (6) distal to the turn-over region (5) are bent away by 90° from the longitudinal orientation of the doubling regions (6) in opposite directions, these regions being referred to as sublegs (7) and forming the second leg (4),
wherein inner sides of the doubling areas (6) are in direct surface contact,
**characterized in that** the metal strip (1) is thinned in the turn-over region (5) by means of roll-profiling so that in the turn-over region (5) the doubling regions (6) are aligned in parallel and are in direct surface contact, the guide rail (2) being manufactured in particular by a method according to one of the claims 1 to 11.

## Revendications

1. Procédé de fabrication d'un rail de guidage (2) avec une section transversale en forme de T, qui présente une première branche (3) et une seconde branche (4), dans lequel une première extrémité de la première branche (3) est fixée à un côté longitudinal de la seconde branche (4), dans lequel le rail de guidage (2) est profilé par roulage à partir d'une bande métallique (1) plate de telle manière que
a. la bande métallique (1) est cintrée à 180° dans une région de rabattement (5), dans lequel la région de rabattement (5) forme une seconde extrémité, située de manière distale par rapport à la seconde branche (4), de la première branche (3),
b. deux régions de doublage (6), adjacentes à la région de rabattement (5), de la bande métallique (1) sont orientées de manière parallèle dans la région de rabattement (5) grâce au cintrage à 180°, dans lequel les deux régions de doublage (6) forment la première branche (3) sous la forme d'un doublage, et
c. deux régions de la bande métallique (1) adjacentes aux régions de doublage (6) de manière distale par rapport à la région de rabattement (5) sont recourbées à 90° dans des directions opposées par rapport à l'orientation longitudinale des régions de doublage (6), dans lequel lesdites régions sont appelées sous-branches (7) et forment la seconde branche (4),
dans lequel la bande métallique (1) est cintrée dans la région de rabattement (5) de telle manière que des côtés intérieurs des régions de doublage (6) sont mis en contact direct à plat,
**caractérisé en ce que** la bande métallique (1) est amincie dans la région de rabattement (5) au moyen d'un profilage par roulage avant ou pendant le cintrage de la bande métallique (1) dans la région de rabattement (5), de sorte que, lors du cintrage de la bande métallique (1), les régions de doublage (6) sont orientées de manière parallèle et mises en contact direct à plat dans la région de rabattement (5).

2. Procédé selon la revendication 1,
**caractérisé en ce que** la bande métallique (1) est amincie dans la région de rabattement (5) de telle manière qu'une cavité (8) est produite à l'intérieur de la région de rabattement (5) au niveau du cintrage à 180°.

3. Procédé selon la revendication 1 ou 2,
**caractérisé en ce que** la région de rabattement (5) est cintrée de telle manière que trois arêtes rectilignes (9, 10) forment les arêtes extérieures de la section transversale de la région de rabattement (5) avec un angle de respectivement 90° entre les arêtes rectilignes (9, 10), dans lequel deux des arêtes rectilignes (9) sont des prolongements d'arêtes extérieures des régions de doublage (6).

4. Procédé selon l'une quelconque des revendications 1 à 3,
**caractérisé en ce que** respectivement une rainure (11) est formée sur un côté extérieur des deux régions de doublage (6) au moyen d'un profilage par roulage avant la mise en contact des deux côtés intérieurs des régions de doublage (6), de telle manière que les deux rainures (11) sont situées de manière proximale par rapport à la première extrémité de la première branche (3) après le profilage du doublage par roulage.

5. Procédé selon la revendication 4,
**caractérisé en ce que** deux gorges (12) sont formées sur les côtés intérieurs des régions de doublage (6) au moyen d'un profilage par roulage avant la mise en contact des deux côtés intérieurs des régions de doublage (6), de telle manière que les deux gorges (12) sont situées entre la première extrémité de la première branche (3) et les extrémités, distales par rapport à la première extrémité de la première branche (3), des rainures (11) après le profilage du doublage par roulage.

6. Procédé selon l'une quelconque des revendications 1 à 5,
**caractérisé en ce qu'**un cordon de soudure (14) est posé au niveau de la première extrémité de la première branche (3) afin de relier l'une à l'autre les deux régions de doublage (6).

7. Procédé selon l'une quelconque des revendications 1 à 6,
**caractérisé en ce que** les sous-branches (7) sont perforées par estampage après le profilage par roulage, dans lequel les trous sont orientés sur les sous-branches (7) de manière symétrique par rapport à l'axe longitudinal de la première branche (3).

8. Procédé selon les revendications 2 et 5,
**caractérisé en ce que** la cavité (8) de la région de rabattement (5) et/ou les deux gorges (12) présente(nt) une section transversale minimale déterminée, de sorte que la cavité (8) et/ou les deux gorges (12) est/sont appropriée(s) pour accueillir un élément allongé, par exemple une conduite ou un filament chauffant.

9. Procédé selon la revendication 8,
**caractérisé en ce que** l'élément allongé est introduit dans la cavité (8).

10. Procédé selon l'une quelconque des revendications 1 à 9,
**caractérisé en ce que** l'élément allongé est une conduite.

11. Procédé selon les revendications 2 et 5,
**caractérisé en ce que** des motifs répétitifs sont estampés dans la région de la cavité (8) de la région de rabattement (5) et/ou dans les deux gorges (12) avant ou pendant le profilage par roulage.

12. Rail de guidage (2), fabriqué à partir d'une bande métallique (1) par profilage par roulage, avec une section transversale en forme de T, dans lequel ladite section transversale en forme de T présente une première branche (3) et une seconde branche (4), dans lequel une première extrémité de la première branche (3) est fixée au niveau d'un côté longitudinal de la seconde branche (4) et une seconde extrémité, située de manière distale par rapport à la seconde branche (4), de la première branche (3) présente une région de rabattement (5) présentant un cintrage à 180° de la bande métallique (1), dans lequel deux régions de doublage (6), adjacentes à la région de rabattement (5), de la bande métallique (1) sont orientées de manière parallèle dans la région de rabattement (5) grâce au cintrage à 180°, dans lequel les régions de doublage (6) forment la première branche (3) sous la forme d'un doublage, et deux régions de la bande métallique (1) adjacentes aux régions de doublage (6) de manière distale par rapport à la région de rabattement (5) sont recourbées à 90° dans des directions opposées par rapport à l'orientation longitudinale des régions de doublage (6), dans lequel lesdites régions sont appelées sous-branches (7) et forment la seconde branche (4),
dans lequel des côtés intérieurs des régions de doublage (6) sont en contact direct à plat,
**caractérisé en ce que** la bande métallique (1) est amincie dans la région de rabattement (5) au moyen d'un profilage par roulage de sorte que les régions de doublage (6) sont orientées de manière parallèle et mises en contact direct à plat dans la région de rabattement (5), dans lequel le rail de guidage (2) est fabriqué en particulier grâce à un procédé selon l'une quelconque des revendications 1 à 11.
